# EUROPEAN PATENT SPECIFICATION

(11) **EP 4 265 691 B1**
(45) Date of publication and mention of the grant of the patent: **26.11.2025**
(21) Application number: 21905662.9
(22) Date of filing: 13.12.2021
(51) Int. Cl.: C09D 5/32, C09D 1/04, C03C 17/30

(54) **COATING SOLUTION, GLASS SHEET AND LAMINATED GLASS FOR BLOCKING UV AND BLUE LIGHT**
BESCHICHTUNGSLÖSUNG, GLASFOLIE, UND LAMINIERTES GLAS ZUM BLOCKEN VON UV-LICHT UND BLAUEM LICHT
LIQUIDE DE REVÊTEMENT, VERRE FEUILLE ET VERRE FEUILLETÉ ANTI-LUMIÈRE UV ET BLEUE

(30) Priority: 15.12.2020 CN 202011469860
(43) Date of publication of application: 25.10.2023
(73) Proprietor: Fuyao Glass Industry Group Co., Ltd., Fuqing, Fujian 350300 (CN)
(72) Inventor: PANG, Qirui, Fuzhou, Fujian 350301 (CN); GUO, Shanji, Fuzhou, Fujian 350301 (CN); SUN, Yingying, Fuzhou, Fujian 350301 (CN); ZHANG, Canzhong, Fuzhou, Fujian 350301 (CN); KE, Cheng, Fuzhou, Fujian 350301 (CN)
(74) Representative: Mewburn Ellis LLP
(86) International application number: PCT/CN2021/137433
(87) International publication number: WO 2022/127733

(56) References cited:
- EP-A1- 1 876 201
- WO-A1-2014/077166
- WO-A1-2017/067091
- CN-A- 105 086 570
- CN-A- 107 021 642
- CN-A- 107 573 725
- CN-A- 107 815 191
- CN-A- 112 646 398
- CN-A- 112 659 679
- JP-A- 2009 251 511
- JP-A- 2019 202 457
- US-A1- 2016 297 707
- US-A1- 2019 025 465
- US-A1- 2019 381 773

## Description

### TECHNICAL FIELD

This disclosure relates to the field of surface coating technology, and particularly to a functional coating that can be coated on a surface of a glass sheet. Specifically, in the disclosure, a coating solution for blocking ultraviolet (UV) and blue light, a glass sheet for blocking UV and blue light, and a laminated glass for blocking UV and blue light are provided, and a laminated glass for blocking UV and blue light and capable of dimming or light emitting is further provided.

### BACKGROUND

A functional coating can be formed on a surface of a substrate by means of surface coating technology, so as to satisfy requirements such as infrared blocking, ultraviolet (UV) blocking, hydrophobic property and oleophobic property, and fog resistance. A UV-blocking coating can significantly reduce a transmittance of UV rays, thereby reducing harm caused by UV rays to human health, and preventing interior decorations of vehicles and houses from aging and fading in a short period. There has been a relatively mature technology for forming a UV-blocking coating on a surface of a glass substrate. For example, Japanese Patent Applications No. 2009184882A, No. 2013189345A, and Chinese Patent Applications No. 102892851A, No. 103347833A, and No. 111819160A, etc., disclose a technology for forming a UV-blocking coating on a surface of a glass substrate by coating a UV-blocking coating solution, the glass substrate with the UV-blocking coating whereby has a relatively good UV-blocking capability and relatively high mechanical durability in hardness and abrasion resistance, etc.

In a visible spectrum, light in a wavelength range of 400 nm~500 nm is generally defined as blue light, where short-wave blue light in a wavelength range of 400 nm~420 nm has relatively high energy that may be harmful to a retina and cause visual fatigue, dazzle, maculopathy, etc. Therefore, a transmittance of the short-wave blue light also needs to be reduced. Chinese Patent Application No. 109455945A discloses a reflective blue-light blocking glass sheet and a method for manufacturing the glass sheet. The glass sheet includes a glass substrate and a blue-light blocking coating. The blue-light blocking coating is formed from a coating solution that has a reflection function, and the coating has a reflectivity of 50% for blue-light in a wavelength range of 400 nm~450 nm. The blue-light blocking coating is mainly coated to electronic products due to its failure in meeting performance requirements of a surface coating on a vehicle glass in terms of abrasion resistance.

In addition, Chinese Patent Application No. 111201457A discloses a glass structure. The glass structure includes a pair of glass sheets, a dimmer disposed between the pair of glass sheets, and a UV absorbing layer disposed between the dimmer and one glass sheet. The UV absorbing layer has a maximum transmittance of less than or equal to 10% over a wavelength range of 370 nm~400 nm, a maximum transmittance of greater than or equal to 50% over a wavelength range of 400 nm~420 nm. If the maximum transmittance over the wavelength range of 400 nm~420 nm is less than 50%, the glass structure looks colored when irradiated by sunlight.

EP 1 876 201 A1 discloses a resin composition for sealing an optical device and including: (A) an organopolysiloxane with a polystyrene equivalent weight average molecular weight of at least 3 × 10³, represented by an average composition formula: R¹ₐ(OX)_{b}SiO_{(4-a-b)}/2 (wherein, each R¹ represents, independently, an alkyl group of 1 to 6 carbon atoms, an alkenyl group of 2 to 6 carbon atoms, or an aryl group of 6 to 10 carbon atoms, each X represents, independently, a hydrogen atom, or an alkyl group, alkenyl group, alkoxyalkyl group or acyl group of 1 to 6 carbon atoms, a represents a number within a range from 1.00 to 1.5, and b represents a number that satisfies 0 < b < 2, provided that 1.00 < a+b < 2), (B) an aluminum chelate compound, and (C) fine particles of a metal oxide sol.

JP 2009 251511 A discloses a color correction filter which is obtained by sequentially stacking adhesive layers and release films subjected to release treatment on at least one surface of a transparent resin layer containing visible light wavelength-selective absorbing coloring material. As the visible light wavelength-selective absorbing coloring material, a coloring material which has the absorption maximum value selective to a wavelength region in the range of 480 nm to 510 nm and has an absorption half-value width of 100 nm or less and/or a coloring material which has the absorption maximum value selective to a wavelength region in the range of 570 nm to 600 nm and has an absorption half-value width of 100 nm or less is used.

US 2019/381773 A1 discloses a resin molded body including a resin layer containing a resin and a compound represented by Formula (1), and on at least one surface of the resin layer, a protective layer that contains at least one substance selected from the group consisting of urethane resin, acrylic resin, and polysiloxane. In Formula (1), Het¹ represents a divalent 5-membered or 6-membered aromatic heterocyclic residue. X*^{a}*, X*^{b}*, X*^{c}*, and X*^{d}* each independently represent a hetero atom, and Y*^{a}*, Y*^{b}*, Y*^{c}*, Y*^{d},* Y*^{e}*, and Y*^{f}* each independently represent a hetero atom or a carbon atom. A ring bonded to Het¹ may have a double bond at any position.

### SUMMARY

Aspects of the invention are set out in the appended claims.

In order to solve a technical problem that a blue-light blocking coating or an ultraviolet (UV) absorbing layer in the related art cannot block both UV and blue light, disclosed herein is a coating solution for blocking UV and blue light, a glass sheet for blocking UV and blue light coated with the coating solution, a method for manufacturing the glass sheet, and a laminated glass for blocking UV and blue light and capable of dimming or light emitting.

According to the coating solution, the glass sheet, and the method for manufacturing the glass sheet described herein, both the UV transmittance and the blue-light transmittance can be reduced, such that requirements for blocking both UV and blue light can be satisfied. The coating can also have excellent properties such as aging resistance and abrasion resistance, such that a normal service life of the substrate can be prolonged. Additionally, the coating solution has a very low volatile organic compound (VOC) emission, which is environmentally friendly and easy to coat. The coating can also comply with regulations of vehicle glass. The coating solution, the glass sheet, and the method for manufacturing the glass sheet can be coated to the laminated glass for blocking UV and blue light provided with the dimming structure or the light emitting structure. This enables the laminated glass to block UV and blue light from outside a vehicle, thereby prolonging a normal service life of the dimming structure or the light emitting structure, protecting the dimming structure, blocking blue light emitted by the light emitting structure, providing better protection for human eyes, and achieving sun shading, privacy protection, intelligent energy conservation and the like.

### BRIEF DESCRIPTION OF THE DRAWINGS

FIG. 1 is a schematic structural diagram of a glass sheet for blocking ultraviolet (UV) and blue light provided in the disclosure.
FIG. 2 is a schematic structural diagram of a laminated glass for blocking UV and blue light provided in the disclosure.
FIG. 3 is a first schematic structural diagram of a laminated glass for blocking UV and blue light provided in the disclosure, where the laminated glass is provided with a dimming structure.
FIG. 4 is a second schematic structural diagram of a laminated glass for blocking UV and blue light provided in the disclosure, where the laminated glass is provided with a dimming structure.

### DETAILED DESCRIPTION

The disclosure is described in detail with combination of accompanying drawings as follows.

A coating solution for blocking ultraviolet (UV) and blue light is provided in the disclosure. The coating solution is configured to form a coating for blocking UV and blue light on a surface of a substrate. The coating can absorb UV and blue light to reduce a UV transmittance and a blue-light transmittance. The coating includes a silica sol and a chelating agent. The silica sol is added with the chelating agent of 5%~20% in mass percent.

The silica sol includes, in mass percent, silicate of 15%~35%, a first solvent of 30%~60%, a first coupling agent of 5%~15%, a first catalyst of 0.01%~1%, and deionized water of 10%~30%. The silica sol can be obtained by mixing and stirring the following components in mass percent: the silicate of 15%~35%, the first solvent of 30%~60%, the first coupling agent of 5%~15%, the first catalyst of 0.01%~1%, and the deionized water of 10%~30%.

The chelating agent includes, in mass percent, a UV absorber of 1%~15%, a blue-light absorber of 1%~15%, a second solvent of 40%~60%, a second catalyst of 0.01%~1%, and a second coupling agent of 10%~30%. The chelating agent can be obtained by mixing and stirring the following components in mass percent: the UV absorber of 1%~15%, the blue-light absorber of 1%~15%, the second solvent of 40%~60%, the second catalyst of 0.01%~1%, and the second coupling agent of 10%~30%.

By adding the blue-light absorber, the coating solution can reduce both the UV transmittance and the blue-light transmittance, such that the coating for blocking both UV and blue light is obtained. In addition, the coating also has excellent properties such as aging resistance and abrasion resistance, such that a normal service life of the substrate of the coating can be prolonged. Additionally, the coating solution has a very low volatile organic compound (VOC) emission, which is environmentally friendly and easy to coat. The coating can also comply with regulations of vehicle glass.

In the disclosure, the silicate is selected from a group consisting of tetramethyl orthosilicate, tetraethyl orthosilicate, trimethoxysilane, triethoxysilane, and dimethyldimethoxysilane.

Each of the first coupling agent and the second coupling agent is a silane coupling agent, and is selected from a group consisting of 3-Aminopropyltrimethoxysilane (KH540), γ-Aminopropyltriethoxysilane (KH550), γ-(2,3-Epoxypropoxy)propyltrimethoxysilane (KH560), γ-Methacryloxypropyltrimethoxysilane (KH570), and N-(β-Aminoethyl)-γ-aminopropyltrimethoxysilane (KH792). It can be understood that the first coupling agent and the second coupling agent may be the same silane coupling agent or different silane coupling agents.

Considering factors such as coating uniformity and performance, the first solvent is at least one of methanol, ethanol, propanol, isopropanol, butanol, or propylene glycol methyl ether, and the second solvent is at least one of butyl acetate, propylene glycol methyl ether, isobutyl acetate, or xylene.

Additionally, in view of coating formation time and the effect, etc., the first catalyst is preferably at least one of hydrochloric acid, nitric acid, or ammonia solution, and the second catalyst is preferably at least one of dibutyltin dilaurate (DY-12), an organobismuth catalyst (DY-20), or stannous octoate.

The UV absorber has an absorption peak in a wavelength range of 330 nm~370 nm, and is selected from a group consisting of a benzophenone UV absorber, a benzimidazole UV absorber, and a triazine UV absorber. Considering factors such as the coating uniformity and performance, a hydroxyl content of the UV absorber is preferably greater than or equal to 5% in mass percent.

Specifically, the benzophenone UV absorber mentioned above may be 2,4-Dihydroxybenzophenone, 2,2',3(or any of 4, 5 and 6)- Trihydroxybenzophenone, 2,2',4,4'-tetrahydroxybenzophenone, 2,4-Dihydroxy-2',4'-Dimethoxybenzophenone, 2-Hydroxy-4-Octyloxybenzophenone, etc.

Specifically, the benzimidazole UV absorber mentioned above may be 2-(2H-benzotriazol-2-yl)-4,6-bis(1-methyl-1-phenylethyl)phenol (UV absorber, trade name UV-234), 2-(5-chloro-2H--benzotriazol-2-yl)-4-methyl-6-(tert-butyl)phenol, octyl-3-[3-tert-butyl-4-hydroxy-5-[5-chloro-2H-benzotriazol-2-yl]propionate, 2-(2H-benzotriazol-2-yl)-4,6-ditertpentylphenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(2-hydroxy-5-tert-octylphenyl)benzotriazole, 2-(2-Hydroxy-5-tert-butylphenyl)-2H-benzotriazole, methyl3-(3-(2H-benzotriazol-2-yl)-5-tert-butyl-4-hydroxyphenyl)propionate, 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, etc.

Specifically, the triazine UV absorber mentioned above may be 2-[4-[(2-hydroxy3-dodecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butoxyphenyl)-6-(2,4-bis-butoxyphenyl)-1,3,5-triazine, 2-(2-hydroxy-4-[1-octylcarbonylethoxy]phenyl)-4,6-bis(4-phenylphenyl)-1,3,5-triazine, TINUVIN 477 (trade name, manufactured by Ciba Japan Co., Ltd.), etc.

Organic UV absorbers mentioned above can absorb UV rays in a relatively wide wavelength-range. In the disclosure, one kind of UV absorber can be used alone or in combination with other kinds of UV absorbers, depending on actual needs.

The blue-light absorber has an absorption peak in a wavelength range of 400 nm~420 nm, and is preferably selected from a group consisting of an azo blue-light absorber, an isoindolinone blue-light absorber, a quinophthalone blue-light absorber, a benzimidazolone blue-light absorber, and an organic-inorganic composite blue-light absorber. Considering the factors such as the coating uniformity and performance, a hydroxyl content of the blue-light absorber is preferably greater than or equal to 5% in mass percent.

Specifically, the azo blue-light absorber mentioned above may be azophenylmethacrylate, 2-[(4-methyl-2-nitrophenyl)azo]-3-oxo-N-phenylbutyramide, 2-[(4-chloro-2-nitrophenyl)azo]-N-(2-chlorophenyl)-3-oxobutyramide, JADEWIN 1226 (trade name, manufactured by Qingdao Jade New Material Technology), 2'-(3,3'-dichloro-1,1'-biphenyl-4,4'-bisazo)bis[N-(4-chloro-2,5-dimethoxyphenyl)-3-oxo-butyramide], etc.

Specifically, the isoindolinone blue-light absorber mentioned above may be 1,3,3-trimethyl-2-methyleneindoline, 3,3'-[(2-methyl-1,3-phenylene)diimino]bis[4,5,6,7-tetrachloro-1H-isoindol-1-one], hexachloroisoindolinone, 2-[[3,3-dichloro-4-[[1-[[(2,4-dimethylphenyl)amino]carbonyl]-2-oxopropyl]azo][1,1'-biphenyl]-4-yl]-azo]-N-(2-methylphenyl)-3-oxo-butyramide, etc.

Specifically, the quinophthalone blue-light absorber mentioned above may be 3-(2-cyclopropyl-4-(4-fluorophenyl)-3-quinolinyl)propenal, 3,4,5,6-tetrachloro-N-[2-(4,5,6,7-tetrachloro-2,3-dihydro-1,3-dioxo-1H-inden-2-yl)-8-quinolyl]phthalimide, etc.

Specifically, the benzimidazolone blue-light absorber mentioned above may be 2-(2-hydroxy-5-isoacrylate ethylphenyl )-2H-benzotriazole, 5-[[1-[[(2,3-dihydro-2-oxo-1H-benzimidazol-5-yl)amino]carbonyl], dimethyl 2-[[1-[[(2,3-dihydro-2-oxo-1H-benzimidazol-5-yl)amino]carbonyl]-2-oxopropyl]azo]-1,4- dimethyl terephthalate, JADEWIN 1227 (trade name, manufactured by Qingdao Jade New Material Technology), etc.

Specifically, the organic-inorganic composite blue-light absorber mentioned above may be U400 (trade name, manufactured by Shanghai Huzheng Nanotechnology Co., Ltd.), U410 (trade name, manufactured by Shanghai Huzheng Nanotechnology Co., Ltd.), U420 (trade name, manufactured by Shanghai Huzheng Nanotechnology Co., Ltd.), U460 (trade name, manufactured by Shanghai Huzheng Nanotechnology Co., Ltd.), etc.

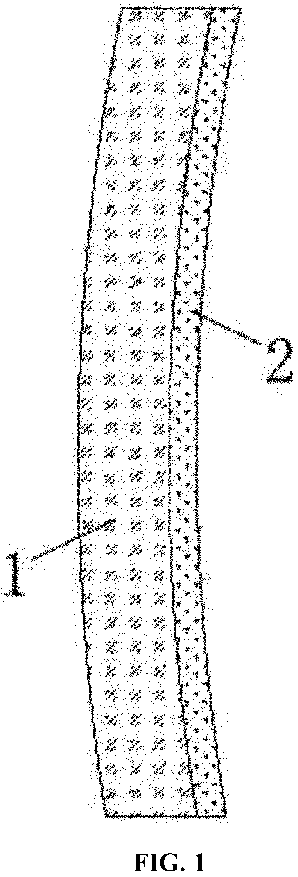

As illustrated in FIG. 1, a glass sheet for blocking UV and blue light is provided in the disclosure. The glass sheet includes a bent glass panel 1, and a coating 2 for blocking UV and blue light. The coating 2 is formed by coating and curing the coating solution for blocking UV and blue light mentioned above on at least one surface of the bent glass panel 1. The coating 2 includes silica, a UV absorber, and a blue-light absorber. The coating 2 has a thickness ranging from 2 µm~12 µm to meet use requirements of vehicle glass. The coating 2 has a transmittance less than or equal to 5% over a wavelength range of 300 nm~400 nm, preferably less than or equal to 2%, more preferably less than or equal to 1%, and further preferably less than or equal to 0.5%. The coating 2 has a maximum transmittance less than or equal to 30% over a wavelength range of 400 nm~440 nm, preferably less than or equal to 20%, more preferably less than or equal to 10%, and most preferably less than or equal to 5%. The glass sheet can block both UV and blue light.

In order to weaken yellowish appearance color of the coating 2, the coating 2 preferably has a transmittance T460 at a wavelength of 460 nm and a transmittance T410 at a wavelength of 410 nm, where 4≤T460/T410≤60, so as to obtain a good appearance, thereby adapting to more use scenarios. When the bent glass panel 1 is a transparent glass panel, the bent glass panel 1 has a transmittance greater than or equal to 70% over a wavelength range of 400 nm~800 nm, and the coating 2 preferably has a transmittance T460 at a wavelength of 460 nm and a transmittance T410 at a wavelength of 410 nm, where 4≤T460/T410≤12. The coating 2 has a transmittance greater than or equal to 70% over a wavelength range of 400 nm~800 nm, preferably greater than or equal to 80%, more preferably greater than or equal to 85%. Furthermore, the bent glass panel 1 preferably has a transmittance greater than or equal to 80% over a wavelength range of 400 nm~800 nm.

In order to meet the use requirements of the vehicle glass, preferably, the coating 2 subjected to a 3000h xenon lamp aging test has a transmittance greater than or equal to 70% over a wavelength range of 400 nm~800 nm, and the coating 2 subjected to a 1000-revolution abrasion resistance test by a plane abrasion tester has a haze difference that is less than 2%.

The bent glass panel 1 is a physically toughened glass, and is formed by subjecting a flat glass panel to high-temperature heat treatment of at least 560 °C and a bending process. The glass sheet may serve as a side window glass, a rear windshield, etc. of a vehicle.

A method for manufacturing the glass sheet for blocking UV and blue light is further provided in the disclosure, and begins with operations at block 1.

At block 1, mix the following components in mass percent to obtain a mixture: a UV absorber of 1%~15%, a blue-light absorber of 1%~15%, a second solvent of 40%~60%, a second catalyst of 0.01%~1%, and a second coupling agent of 10%~30%, and perform refluxing and stirring on the obtained mixture in a constant-temperature oil bath pan at 100 °C to obtain a chelating agent.

For a sufficient reaction, a duration for performing refluxing and stirring is preferably 2 hours~8 hours, and a temperature for performing refluxing and stirring is preferably 100 °C~150 °C.

At block 2, mix the following components in mass percent to obtain a mixture: silicate of 15%~35%, a first solvent of 30%~60%, a first coupling agent of 5%~15%, a first catalyst of 0.01%~1%, and deionized water of 10%~30%, and stir the mixture in a water bath at 40 °C to obtain a silica sol.

For a sufficient reaction, a duration for stirring is preferably 60 minutes~120 minutes.

At block 3, add the chelating agent of 5%~20% in mass percent to the silica sol, and mix and stir the silica sol with the added chelating agent to obtain a coating solution for blocking UV and blue light.

For a sufficient reaction, a duration for mixing and stirring is preferably greater than or equal to 120 minutes.

At block 4, coat the coating solution on at least one surface of the bent glass panel 1, and cure the coated coating solution at 80 °C~120 °C to obtain a glass sheet for blocking UV and blue light with a coating for blocking UV and blue light.

The bent glass panel 1 has a convex and a concave. After the bent glass panel 1 is mounted on a vehicle, the convex faces an outside of the vehicle, and the concave faces an inside of the vehicle. Preferably, the coating solution is coated on the concave.

A duration for curing at 80 °C~120 °C is preferably 10 minutes~200 minutes.

Before curing at 80 °C~120 °C, block 4 further includes pre-drying the coating solution coated on the at least one surface of the bent glass panel 1. Pre-drying is performed at a temperature of 20~60 °C, a humidity of 45%~65%, and for a duration of 20 minutes~40 minutes, facilitating the subsequent curing.

The coating solution may be coated on the at least one surface of the bent glass panel 1 through a curved surface coating technology such as spray coating, wipe coating, flow coating, brush coating, dip coating, or the like, as well as a composite coating method formed by combining ultrasonic, centrifugal, or rotational techniques.

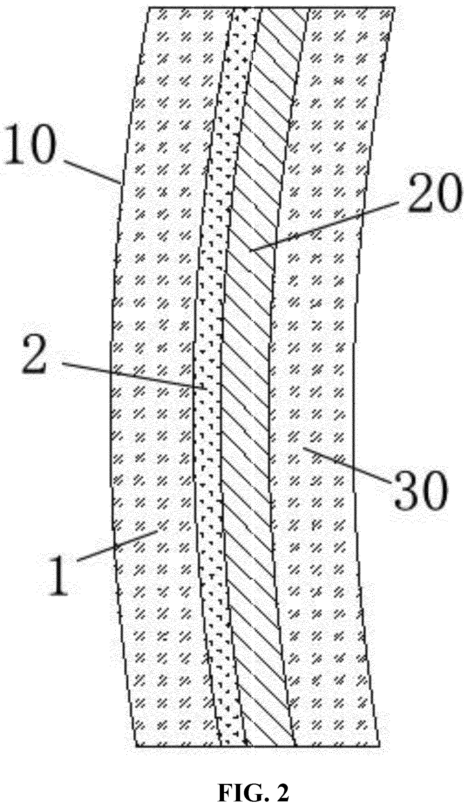

As illustrated in FIG. 2, a laminated glass for blocking UV and blue light is provided in the disclosure. The laminated glass includes a glass sheet 10, an intermediate adhesive layer 20, and a second glass panel 30. The intermediate adhesive layer 20 is sandwiched between the glass sheet 10 and the second glass panel 30. The glass sheet 10 includes the bent glass panel 1 and the coating 2. The coating 2 is disposed on at least one surface of the bent glass panel 1.

The laminated glass may serve as a front windshield, a side window glass, a sunroof glass, or a rear windshield of a vehicle. After the laminated glass is mounted on a vehicle, the glass sheet 10 serves preferably as an outer glass panel, i.e., the glass sheet 10 is located on an outside surface of the vehicle, and the coating 2 is located between the bent glass panel 1 and the intermediate adhesive layer 20, such that UV radiation on the intermediate adhesive layer 20 can be reduced, and a UV-aging speed of the intermediate adhesive layer 20 can be lowered, and a normal service life of the laminated glass can be prolonged.

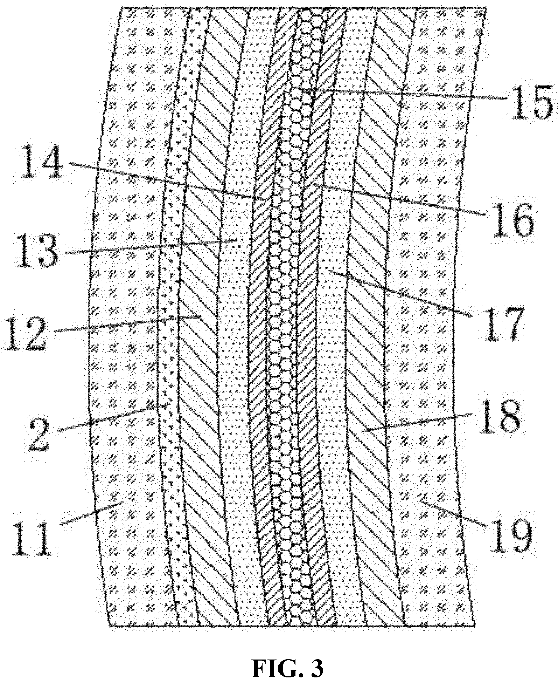

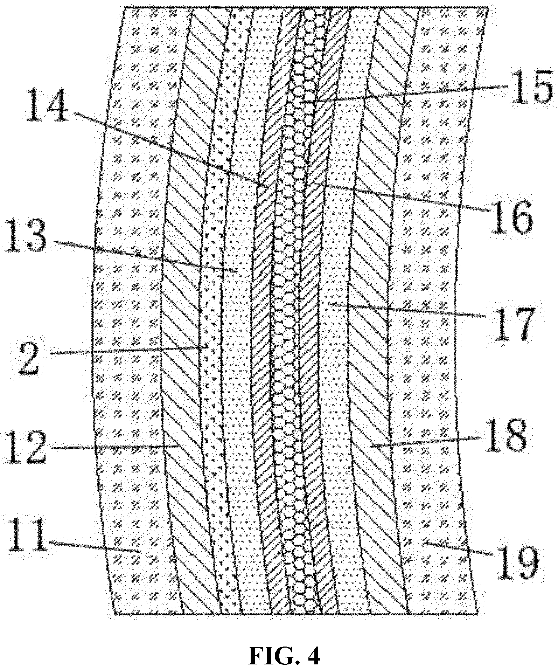

As illustrated in FIG. 3 and FIG. 4, a laminated glass for blocking UV and blue light is provided in the disclosure, and may serve as a sunroof glass capable of dimming. The laminated glass includes a first glass panel 11, a first adhesive layer 12, a first carrier layer 13, a first planar electrode 14, a dimming layer 15, a second planar electrode 16, a second carrier layer 17, a second adhesive layer 18, and a second glass panel 19 that are stacked in sequence, and includes the coating 2. The coating 2 is disposed between the first glass panel 11 and the first carrier layer 13, and/or the coating 2 is disposed between the second glass panel 19 and the second carrier layer 17. The coating 2 can significantly reduce UV rays and blue light entering the vehicle, protecting objects in the vehicle and human eyes, and protecting the dimming layer 15, particularly a PDLC device.

In FIG. 3, the coating 2 is disposed on a surface of the first glass panel 11 and located between the first glass panel 11 and the first adhesive layer 12. The coating 2 is further configured to protect the first adhesive layer 12 from a large amount of UV radiation, and prolong a normal service life of the laminated glass. It can be understood that the coating 2 may also be disposed on a surface of the second glass panel 19 and located between the second glass panel 19 and the second adhesive layer 18. Preferably, the first glass panel 11 serves as an outer glass panel, i.e., the first glass panel 11 is located on an outside surface of a vehicle, and the coating 2 is configured to block UV and blue light from the outside of the vehicle.

In FIG. 4, the coating 2 is disposed on a surface of the first carrier layer 13 and located between the first carrier layer 13 and the first adhesive layer 12. The coating 2 is configured to block UV and blue light from the outside of the vehicle, so as to protect articles in the vehicle, human eyes, and the dimming layer 15. It can be understood that, the coating 2 may also be disposed on a surface of the second carrier layer 17 and located between the second carrier layer 17 and the second adhesive layer 18.

The dimming layer 15 is configured to adjust a visible-light transmittance of the laminated glass by powering the first planar electrode 14 and the second planar electrode 16. The dimming layer 15 may be a PDLC device, an SPD, or an EC device, so that the laminated glass can meet requirements of sunshade, privacy protection, intelligent energy conservation, and the like.

Each of the first planar electrode 14 and the second planar electrode 16 is a transparent conductive layer, and may specifically include a metal layer, a metal alloy layer, or a metal oxide layer. The metal layer may be made of a material that is selected from Au, Ag, Cu, Al, or Mo. The metal alloy layer may be made of a material that is selected from an Ag alloy, such as an Ag-Cu alloy, an Ag-indium alloy, or the like. The metal oxide layer may be made of a material that is selected from ITO, FTO, AZO, ATO, or the like.

In the disclosure, the first carrier layer 13, the first planar electrode 14, the dimming layer 15, the second planar electrode 16, and the second carrier layer 17 are pre-stacked to form a dimming structure. Each of the first carrier layer 13 and the second carrier layer 17 is generally made of polyethylene terephthalate (PET), polyvinyl chloride (PVC), polyvinyl butyral (PVB), ethylene vinyl acetate copolymer (EVA), polyacrylate (PA), or polyurethane (PUR). Each of the first adhesive layer 12 and the second adhesive layer 18 is use to further adhere the dimming structure between the first glass panel 11 and the second glass panel 19 to form the laminated glass. Each of the first adhesive layer 12 and the second adhesive layer 18 is generally be made of PVB, ionic intermediate film (SGP), PVC, EVA, PA, PUR, or the like. Preferably, the first adhesive layer 12 and the second adhesive layer 18 can also absorb UV rays, so as to reduce UV rays entering the vehicle. Additionally, since a dimming performance of the dimming layer 15, particularly the PDLC device, is easily affected by UV rays, the first adhesive layer 12 and the second adhesive layer 18 capable of absorbing UV rays are also configured for protecting the dimming layer 15, particularly the PDLC device.

In the disclosure, the dimming structure located between the first adhesive layer 12 and the second adhesive layer 18 can also be replaced with a light emitting structure. The light emitting structure can emit blue light or white light, and for example, the light emitting structure may be an organic light-emitting diode (OLED), an inorganic light-emitting diode (LED), an inorganic thin-film electroluminescent element (TFEL), or an organic thin film electroluminescent element (OTFEL), etc. The coating 2 is disposed on a surface of the first glass panel 11 and located between the first glass panel 11 and the first adhesive layer 12, and the coating 2 is also configured for reducing harmful blue light emitted by the light emitting structure. It can be understood that, the coating 2 may also be disposed on a surface of the second glass panel 19 and located between the second glass panel 19 and the second adhesive layer 18. Preferably, the second glass panel 19 serves as an inner glass panel, i.e., the second glass panel 19 is located on an inside surface of the vehicle, and the coating 2 is configured for blocking UV and blue light form an outside of the vehicle and blue light emitted by the light emitting structure, so as to protect human eyes better.

At least one of the first glass panel 11, the first adhesive layer 12, the second adhesive layer 18, or the second glass panel 19 is colored in bulk and has a relatively low visible-light transmittance. At least one of the first glass panel 11 or the second glass panel 19 is a colored glass. For example, a visible-light transmittance of the colored glass such as green glass and grey glass may be less than 70%, less than or equal to 41%, less than or equal to 30%, or less than or equal to 26%. At least one of the first adhesive layer 12 or the second adhesive layer 18 is a colored adhesive layer, and for example, a visible-light transmittance of the colored adhesive layer made of a material such as different types of gray PVB is less than or equal to 44%, 18%, 8%, 5%, or 2%. In this way, privacy can be protected, and a sunshade curtain can be removed when the colored glass serves as a sunroof glass, thereby reducing the product cost and enhancing a space inside a vehicle.

### Embodiments

Some embodiments of the disclosure are given for further illustration, but the disclosure is not limited to the following embodiments.

### Embodiment 1

A mixing of 10 g of BP-2 UV absorber, 10 g of U410 blue-light absorber, 55 g of butyl acetate solvent, 0.15 g of dibutyltin dilaurate catalyst, and 25 g of γ-Methacryloxypropyltrimethoxysilane is refluxed and stirred in a constant-temperature oil bath pan at 100 °C for 4 hours, and then naturally cooled to a room temperature to obtain chelating agent U1.

A mixing of 13.56 g of tetraethyl orthosilicate, 20 g of absolute ethanol, 30 g of isopropanol, 5.18 g of γ-methacryloxypropyltrimethoxysilane, 0.1 g of nitric acid solution with a mass fraction of 10%, and 12.5 g of deionized water is stirred for 60 minutes in a water bath at 40 °C to obtain silica sol A1.

A mixing of 15 g of silica sol A1 and 1 g of chelating agent U1 is stirred for 120 minutes to obtain coating solution B1 for blocking UV and blue light.

In a dust-free environment, an appropriate amount of coating solution B1 is weighed and coated on a surface of the bent glass panel 1 with a wire bar coater. After being allowed to stand for leveling, coating solution B1 is pre-dried with an infrared lamp, and then further cured at 110 °C for 55 minutes to obtain glass sheet C1 with a coating for blocking UV and blue light.

### Embodiment 2

A mixing of 10 g of BP-2 UV absorber, 10 g of U420 blue-light absorber, 55 g of butyl acetate solvent, 0.15 g of dibutyltin dilaurate catalyst, and 25 g of γ-Methacryloxypropyltrimethoxysilane is refluxed and stirred in a constant-temperature oil bath pan at 100 °C for 4 hours, and then naturally cooled to a room temperature to obtain chelating agent U2.

A mixing of 13.56 g of tetraethyl orthosilicate, 22 g of absolute ethanol, 28 g of isopropanol, 5.18 g of γ-Methacryloxypropyltrimethoxysilane, 0.1 g of nitric acid solution with a mass fraction of 10%, and 12.5 g of deionized water is stirred for 70 minutes in a water bath at 40 °C to obtain silica sol A2.

A mixing of 20 g of silica sol A2 and 1.5 g of chelating agent U2 is stirred for 120 minutes to obtain coating solution B2 for blocking UV and blue light.

In a dust-free environment, an appropriate amount of coating solution B2 is weighed and coated on a surface of the bent glass panel 1 with a wire bar coater. After being allowed to stand for leveling, coating solution B2 is pre-dried with an infrared lamp, and then further cured at 110 °C for 55 minutes to obtain glass sheet C2 with a coating for blocking UV and blue light.

### Embodiment 3

A mixing of 10 g of BP-2 UV absorber, 10 g of JADEWIN 1226 blue-light absorber, 55 g of butyl acetate solvent, 0.15 g of dibutyltin dilaurate catalyst, and 25 g of γ-Methacryloxypropyltrimethoxysilane is refluxed and stirred in a constant-temperature oil bath pan at 100 °C for 4 hours, and then naturally cooled to a room temperature to obtain chelating agent U3.

A mixing of 13.56 g of tetraethyl orthosilicate, 25 g of absolute ethanol, 28 g of isopropanol, 5.18 g of γ-Methacryloxypropyltrimethoxysilane, 0.1 g of nitric acid solution with a mass fraction of 10%, and 12.5 g of deionized water is stirred for 80 minutes in a water bath at 40 °C to obtain silica sol A3.

A mixing of 20 g of silica sol A3 and 1.3 g of chelating agent U3 is stirred for 120 minutes to obtain coating solution B3 for blocking UV and blue light.

In a dust-free environment, an appropriate amount of coating solution B3 is weighed and coated on a surface of the bent glass panel 1 with a wire bar coater. After being allowed to stand for leveling, coating solution B3 is pre-dried with an infrared lamp, and then further cured at 110 °C for 55 minutes to obtain glass sheet C3 with a coating for blocking UV and blue light.

### Embodiment 4

A mixing of 10 g of silica sol A1 and 1 g of chelating agent U1 is stirred for 120 minutes an obtained mixture to obtain coating solution B4 for blocking UV and blue light.

In a dust-free environment, an appropriate amount of coating solution B4 is weighed and coated on a surface of the bent glass panel 1 with a wire bar coater. After being allowed to stand for leveling, coating solution B4 is pre-dried with an infrared lamp, and then further cured at 110 °C for 55 minutes to obtain glass sheet C4 with a coating for blocking UV and blue light.

### Embodiment 5

A mixing of 10 g of silica sol A1 and 1.5 g of chelating agent U1 is stirred for 120 minutes to obtain coating solution B5 for blocking UV and blue light.

In a dust-free environment, an appropriate amount of coating solution B5 is weighed and coated on a surface of the bent glass panel 1 with a wire bar coater. After being allowed to stand for leveling, coating solution B5 is pre-dried with an infrared lamp, and then further cured at 110 °C for 55 minutes to obtain glass sheet C5 with a coating for blocking UV and blue light.

### Comparative embodiment 1

In a dust-free environment, an appropriate amount of silica sol A1 is weighed and coated on a surface of the bent glass panel 1 with a wire bar coater. After being allowed to stand for leveling, silica sol A1 is pre-dried with an infrared lamp, and further then cured at 110 °C for 55 minutes to obtain comparative glass sheet D1.

### Comparative embodiment 2

A mixing of 10 g of silica sol A1 and 3 g of chelating agent U1 is stirred for 120 minutes to obtain coating solution B6 for blocking UV and blue light.

In a dust-free environment, an appropriate amount of coating solution B6 is weighed and coated on a surface of the bent glass panel 1 with a wire bar coater. After being allowed to stand for leveling, coating solution B6 is pre-dried with an infrared lamp, and then further cured at 110°C for 55 minutes to obtain glass sheet D2 with a coating for blocking UV and blue light is obtained.

### Evaluation

Glass sheet samples obtained in embodiments 1 to 5 and comparative embodiments 1 and 2 are evaluated by the following test, and an evaluation result is illustrated in Table 1.

Transmittance: a transmittance spectrum over a wavelength range of 250 nm~2550 nm is measured by using a spectrophotometer. A UV transmittance over a wavelength range of 300 nm~400 nm and a visible-light transmittance over a wavelength range of 400 nm~800 nm are calculated according to ISO 13837 standard, and a maximum blue-light transmittance over a wavelength range of 400 nm~440 nm is obtained according to the transmittance spectrogram. The transmittance in the disclosure refers to an average value that is obtained by measuring five different points on the same glass-sheet sample.

Coating thickness: The coating thickness is measured by a step gauge.

Aging resistance: in an aging resistance test, a sample is putted into a xenon lamp aging tester (model: CI4000 U.S.) with calibrated lamp tubes, where a rainfall cycle is set to consist of drying time of 102 minutes and rainfall time of 18 minutes, an irradiance is set to be 60±2w/m² with a wavelength of 300 nm~400 nm, test time is set to be 3000 hours, a black panel temperature is set to be 65±3 °C, and a relative humidity is set to be 50±10%. The sample after the aging resistance test is observed to determine that whether there is a crack on an appearance of the coating.

Abrasion resistance: the abrasion resistance is measured by a plane abrasion tester. A glass sample is placed on the plane abrasion tester with a coating facing upward and subjected to 1000-revolution plane abrasion resistance test.

Haze: a hazemeter is used to test a sample after the abrasion resistance test. Haze1 is obtained by testing a region that has not undergone the abrasion resistance test. Haze2 is obtained by moving the sample and testing a region that has undergone the abrasion resistance test. A haze difference before and after abrasion resistance test is |Haze2-Haze1|.

**Table 1: evaluation result of comparative embodiments 1 and 2 and embodiments 1 to 5**

| Evaluation items | Comparativ e embodiment 1 | Comparativ e embodiment 2 | Embodimen t 1 | Embodimen t 2 | Embodimen t 3 | Embodimen t 4 | Embodimen t 5 |
|---|---|---|---|---|---|---|---|
| Coating thickness | 5.1 µm | 4.9 µm | 5.3 µm | 4.8 µm | 5.4 µm | 5.2 µm | 5.1 µm |
| UV transmittanc e for 300 nm~400 nm | 49.77% | 0.02% | 0.01% | 0.03% | 0.01% | 0.01% | 0.01% |
| Maximum blue-light transmittanc e for 400 nm~440 nm | 78.52% | 0.97% | 9.78% | 4.55% | 11.75% | 3.22% | 1.17% |
| Visible-light transmittanc e for 400 nm~800 nm | 80.51% | 60.58% | 72.15% | 70.88% | 71.74% | 66.42% | 63.41% |
| Aging resistance | qualified | qualified | qualified | qualified | qualified | qualified | qualified |
| Haze difference before and after abrasion resistance test | 1.2% | 2.4% | 1.3% | 1.1% | 1.5% | 1.3% | 1.6% |

The following can be seen from Table 1.

In comparative embodiment 1, a silica sol coating is formed on the bent glass panel. Though the silica sol coating satisfies the requirements of aging resistance and abrasion resistance, the silica sol coating cannot block the UV and blue light.

In comparative embodiment 2, the coating for blocking UV and blue light is formed on the bent glass panel. However, an excessive amount (such as 30%) of the chelating agent is added to the silicon sol. Although the UV transmittance and the maximum blue-light transmittance of the coating can satisfy requirements and are low, the coating does not satisfy abrasion resistance requirements, and thus the coating cannot serve as a vehicle glass.

In embodiments 1 to 3, the coating for blocking UV and blue light is formed on the bent glass panel. By adding an appropriate amount of the chelating agent to the silicon sol, not only the UV transmittance, the maximum blue-light transmittance, and the visible-light transmittance satisfy requirements, but also both the aging resistance and the abrasion resistance satisfy requirements.

In embodiments 4 and 5, the coating for blocking UV and blue light is formed on the bent glass panel, and an appropriate amount of the chelating agent is added to the silica sol, where more chelating agent is added in embodiments 4 and 5 than embodiments 1 to 3. In embodiments 4 and 5, the UV transmittance satisfies requirements, both the aging resistance and the abrasion resistance also satisfy requirements, the maximum blue-light transmittance is less than that in embodiments 1 to 3, but the visible-light transmittance is less than 70%. Therefore, the glass sheet in embodiments 4 and 5 can be coated to a portion of a vehicle where there is no requirement for visible-light transmittance or where the allowed visible-light transmittance is less than 70%. For example, the glass sheet can serve as a sunroof glass, and in particular a sunroof glass without a sunshade curtain, a dimming sunroof glass, or a light-emitting sunroof glass, etc.

## Claims

1. A coating solution for blocking ultraviolet (UV) and blue light, configured to form a coating (2) for blocking UV and blue light on a surface of a substrate, and comprising a silica sol and a chelating agent, wherein:
the silica sol comprises, in mass percent, silicate of 15%~35%, a first solvent of 30%~60%, a first coupling agent of 5%~15%, a first catalyst of 0.01%~1%, and deionized water of 10%~30%, wherein the first solvent is at least one of methanol, ethanol, propanol, isopropanol, butanol, or propylene glycol methyl ether, wherein the first coupling agent is at least one of 3-Aminopropyltrimethoxysilane, γ-Aminopropyltriethoxysilane, γ-(2,3-Epoxypropoxy)propyltrimethoxysilane, γ-Methacryloxypropyltrimethoxysilane, or N-(β-Aminoethyl)-γ-aminopropyltrimethoxysilane, and wherein the first catalyst is at least one of hydrochloric acid, nitric acid, or ammonia solution; and
the chelating agent comprises, in mass percent, a UV absorber of 1%~15%, a blue-light absorber of 1%~15%, a second solvent of 40%~60%, a second catalyst of 0.01%~1%, and a second coupling agent of 10%~30%, wherein the UV absorber has an absorption peak in a wavelength range of 330 nm~370 nm, wherein the blue-light absorber has an absorption peak in a wavelength range of 400 nm~420 nm, wherein the second solvent is at least one of butyl acetate, propylene glycol methyl ether, isobutyl acetate, or xylene, wherein the second coupling agent is at least one of 3-Aminopropyltrimethoxysilane, γ-Aminopropyltriethoxysilane, γ-(2,3-Epoxypropoxy)propyltrimethoxysilane, γ-Methacryloxypropyltrimethoxysilane, or N-(β-Aminoethyl)-γ-aminopropyltrimethoxysilane, and wherein the second catalyst is at least one of dibutyltin dilaurate, an organobismuth catalyst, or stannous octoate.

2. The coating solution of claim 1, wherein the silica sol is added with the chelating agent of 5%~20% in mass percent.

3. The coating solution of claim 1, wherein the silicate is at least one of tetramethyl orthosilicate, tetraethyl orthosilicate, trimethoxysilane, triethoxysilane, or dimethyldimethoxysilane.

4. The coating solution of claim 1, wherein a hydroxyl content of the UV absorber is greater than or equal to 5% in mass percent, and the UV absorber is at least one of a benzophenone UV absorber, a benzimidazole UV absorber, or a triazine UV absorber.

5. The coating solution of claim 1, wherein a hydroxyl content of the blue-light absorber is greater than or equal to 5% in mass percent, and the blue-light absorber is at least one of an azo blue-light absorber, an isoindolinone blue-light absorber, a quinophthalone blue-light absorber, a benzimidazolone blue-light absorber, or an organic-inorganic composite blue-light absorber.

6. A glass sheet (10) for blocking ultraviolet (UV) and blue light, comprising a bent glass panel (1) and a coating (2) for blocking UV and blue light, the coating (2) being formed from the coating solution of any one of claims 1 to 5 and being disposed on at least one surface of the bent glass panel (1), wherein the coating (2) comprises silica, a blue light absorber, and a UV absorber the coating (2) has a thickness ranging from 2 µm~12 µm, the coating (2) has a transmittance less than or equal to 5% over a wavelength range of 300 nm~400 nm, and the coating (2) has a maximum transmittance less than 30% over a wavelength range of 400 nm~440 nm.

7. The glass sheet (10) of claim 6, wherein the coating (2) has the transmittance less than or equal to 2% over the wavelength range of 300 nm~400 nm, and the coating (2) has the maximum transmittance less than or equal to 20% over the wavelength range of 400 nm~440 nm.

8. The glass sheet (10) of claim 6, wherein the coating (2) has the transmittance less than or equal to 1% over the wavelength range of 300 nm~400 nm, and the coating (2) has the maximum transmittance less than or equal to 10% over the wavelength range of 400 nm~440 nm.

9. The glass sheet (10) of claim 6, wherein the coating (2) has a transmittance T460 at a wavelength of 460 nm and a transmittance T410 at a wavelength of 410 nm, wherein 4≤T460/T410≤60.

10. A laminated glass for blocking ultraviolet (UV) and blue light, comprising the glass sheet (10) of any of claims 6 to 9, an intermediate adhesive layer (20), and a second glass panel (30), wherein the intermediate adhesive layer (20) is sandwiched between the glass sheet (10) and the second glass panel (30), the glass sheet (10) comprises the bent glass panel (1) and the coating (2), the coating (2) is disposed on at least one surface of the bent glass panel (1), and the coating (2) is located between the bent glass panel (1) and the intermediate adhesive layer (20).

11. A laminated glass for blocking ultraviolet (UV) and blue light and capable of dimming or light emitting, comprising a first glass panel, a first adhesive layer, a dimming structure or a light emitting structure, a second adhesive layer, and a second glass panel that are stacked in sequence, wherein
a coating for blocking UV and blue light is disposed between the first glass panel and the dimming structure or between the first glass panel and the light emitting structure, wherein the coating is formed from the coating solution of any one of claims 1 to 5 and comprises silica, a blue light absorber, and a UV absorber the coating has a transmittance less than or equal to 5% over a wavelength range of 300 nm~400 nm, and the coating has a maximum transmittance less than 30% over a wavelength range of 400 nm~440 nm; and/or
the coating is disposed between the second glass panel and the dimming structure or between the second glass panel and the light emitting structure, wherein the coating is formed from the coating solution of any one of claims 1 to 5 and comprises silica, the coating has a transmittance less than or equal to 5% over a wavelength range of 300 nm~400 nm, and the coating has a maximum transmittance less than 30% over a wavelength range of 400 nm~440 nm.

## Patentansprüche

1. Beschichtungslösung zum Blockieren von Ultraviolett- (UV-) und Blaulicht, die ausgelegt ist, um eine Beschichtung (2) zum Blockieren von UV- und Blaulicht auf einer Oberfläche eines Substrats zu bilden, und ein Kieselsol und einen Chelatbildner umfasst, wobei:
das Kieselsol, in Massenprozent, 15 % - 35 % Silikat, 30 % - 60 % eines ersten Lösungsmittels, 5 % - 15 % eines ersten Haftvermittlers, 0,01 % - 1 % eines ersten Katalysators und 10 % - 30 % deionisiertes Wasser umfasst, wobei das erste Lösungsmittel zumindest eines aus Methanol, Ethanol, Propanol, Isopropanol, Butanol oder Propylenglykolmethylether ist, wobei der erste Haftvermittler zumindest einer aus 3-Aminopropyltrimethoxysilan, γ-Aminopropyltriethoxysilan, γ-(2,3-Epoxypropoxy)propyltrimethoxysilan, γ-Methacryloxypropyltrimethoxysilan oder N-(β-Aminoethyl)-γ-aminopropyltrimethoxysilan ist und wobei der erste Katalysator zumindest einer aus Salzsäure, Salpetersäure oder Ammoniaklösung ist; und
der Chelatbilder, in Massenprozent, 1 % - 15 % UV-Absorber, 1 % - 15 % Blaulicht-Absorber, 40 % - 60 % eines zweiten Lösungsmittels, 0,01 % - 1 % eines zweiten Katalysators und 10 % - 30 % eines zweiten Haftvermittlers umfasst, wobei der UV-Absorber einen Absorptionspeak in einem Wellenlängenbereich von 330 nm - 370 nm aufweist, wobei der Blaulicht-Absorber einen Absorptionspeak in einem Wellenlängenbereich von 400 nm - 420 nm aufweist, wobei das zweite Lösungsmittel zumindest eines aus Butylacetat, Propylenglykolmethylether, Isobutylacetat oder Xylol ist, wobei der zweite Haftvermittler zumindest einer aus 3-Aminopropyltrimethoxysilan, γ-Aminopropyltriethoxysilan, γ-(2,3-Epoxypropoxy)propyl-trimethoxysilan, γ-Methacryloxypropyltrimethoxysilan oder N-(β-Aminoethyl)-γ-aminopropyltrimethoxysilan ist und wobei der zweite Katalysator zumindest einer aus Dibutylzinndilaurat, einem Organobismutkatalysator oder Zinnoctoat ist.

2. Beschichtungslösung nach Anspruch 1, wobei dem Kieselsol, in Massenprozent, 5 % - 20 % Chelatbildner zugesetzt sind.

3. Beschichtungslösung nach Anspruch 1, wobei das Silicat zumindest eines aus Tetramethylorthosilicat, Tetraethylorthosilicat, Trimethoxysilan, Triethoxysilan oder Dimethyldimethoxysilan ist.

4. Beschichtungslösung nach Anspruch 1, wobei der Hydroxylgehalt des UV-Absorbers größer als oder gleich 5 %, in Massenprozent, ist und der UV-Absorber zumindest einer aus einem Benzophenon-UV-Absorber, einem Benzimidazol-UV-Absorber oder einem Triazin-UV-Absorber ist.

5. Beschichtungslösung nach Anspruch 1, wobei der Hydroxylgehalt des Blaulicht-Absorbers größer als oder gleich 5 %, in Massenprozent, ist und der Blaulicht-Absorber zumindest einer aus einem Azo-Blaulicht-Absorber, einem Isoindolinon-Blaulicht-Absorber, einem Chinophthalon-Blaulicht-Absorber, einem Benzimidazolon-Blaulicht-Absorber oder einem Blaulicht-Absorber aus einem organisch-anorganischen Verbundstoff ist.

6. Glasscheibe (10) zum Blockieren von Ultraviolett- (UV-) und Blaulicht, die eine gebogene Glasplatte (1) und eine Beschichtung (2) zum Blockieren von UV- und Blaulicht umfasst, wobei die Beschichtung (2) aus einer Beschichtungslösung nach einem der Ansprüche 1 bis 5 gebildet ist und auf zumindest einer Oberfläche der gebogenen Glasplatte (1) angeordnet ist, wobei die Beschichtung (2) Silica, einen Blaulicht-Absorber und einen UV-Absorber umfasst, die Beschichtung (2) eine Dicke im Bereich von 2 µm - 12 µm aufweist, die Beschichtung (2) eine Durchlässigkeit von weniger als oder gleich 5 % über einen Wellenlängenbereich von 300 nm - 400 nm aufweist und die Beschichtung (2) eine maximale Durchlässigkeit von weniger als 30 % über einen Wellenlängenbereich von 400 nm - 440 nm aufweist.

7. Glasscheibe (10) nach Anspruch 6, wobei die Beschichtung (2) eine Durchlässigkeit von weniger als oder gleich 2 % über einen Wellenlängenbereich von 300 nm - 400 nm aufweist und die Beschichtung (2) eine maximale Durchlässigkeit von weniger als oder gleich 20 % über einen Wellenlängenbereich von 400 nm - 440 nm aufweist.

8. Glasscheibe (10) nach Anspruch 6, wobei die Beschichtung (2) eine Durchlässigkeit von weniger als oder gleich 1 % über einen Wellenlängenbereich von 300 nm - 400 nm aufweist und die Beschichtung (2) eine maximale Durchlässigkeit von weniger als oder gleich 10 % über einen Wellenlängenbereich von 400 nm - 440 nm aufweist.

9. Glasscheibe (10) nach Anspruch 6, wobei die Beschichtung (2) eine Durchlässigkeit T460 bei einer Wellenlänge von 460 nm und eine Durchlässigkeit T410 bei einer Wellenlänge von 410 nm aufweist, wobei 4 ≤ T460/T410 ≤ 60 ist.

10. Laminiertes Glas zum Blockieren von Ultraviolett- (UV-) und Blaulicht, das eine Glasscheibe (10) nach einem der Ansprüche 6 bis 9, eine Zwischenklebeschicht (20) und eine zweite Glasplatte (30) umfasst, wobei die Zwischenklebeschicht (20) sandwichartig zwischen der Glasscheibe (10) und der zweiten Glasplatte (30) angeordnet ist, wobei die Glasscheibe (10) die gebogene Glasplatte (1) und die Beschichtung (2) umfasst, die Beschichtung (2) auf zumindest einer Oberfläche der gebogenen Glasplatte (1) angeordnet ist und sich die Beschichtung (2) zwischen der gebogenen Glasplatte (1) und der Zwischenklebeschicht (20) befindet.

11. Laminiertes Glas zum Blockieren von Ultraviolett- (UV-) und Blaulicht, das in der Lage ist, zu dimmen oder Licht zu emittieren, und eine erste Glasplatte, eine erste Kleberschicht, eine Dimmstruktur oder eine lichtemittierende Struktur, eine zweite Kleberschicht und eine zweite Glasplatte umfasst, die übereinander gestapelt sind, wobei
eine Beschichtung zum Blockieren von UV- und Blaulicht zwischen der ersten Glasplatte und der Dimmstruktur oder zwischen der ersten Glasplatte und der lichtemittierenden Struktur angeordnet ist, wobei die Beschichtung aus einer Beschichtungslösung nach einem der Ansprüche 1 bis 5 gebildet ist und Silica, einen Blaulicht-Absorber und einen UV-Absorber umfasst,
die Beschichtung eine Durchlässigkeit von weniger als oder gleich 5 % über einen Wellenlängenbereich von 300 nm - 400 nm aufweist und die Beschichtung eine maximale Durchlässigkeit von weniger als 30 % über einen Wellenlängenbereich von 400 nm - 440 nm aufweist; und/oder
die Beschichtung zwischen der zweiten Glasplatte und der Dimmstruktur oder zwischen der zweiten Glasplatte und der lichtemittierenden Struktur angeordnet ist, wobei die Beschichtung aus einer Beschichtungslösung nach einem der Ansprüche 1 bis 5 gebildet ist und Silica umfasst, die Beschichtung eine Durchlässigkeit von weniger als oder gleich 5 % über einen Wellenlängenbereich von 300 nm - 400 nm aufweist und die Beschichtung (2) eine maximale Durchlässigkeit von weniger als 30 % über einen Wellenlängenbereich von 400 nm - 440 nm aufweist.

## Revendications

1. Solution de revêtement pour bloquer de la lumière ultraviolette (UV) et bleue, configurée pour former un revêtement (2) pour bloquer de la lumière UV et bleue sur une surface d'un substrat, et comprenant un sol de silice et un agent chélatant, dans laquelle :
le sol de silice comprend, en pourcentage en masse, du silicate de 15 % à 35 %, un premier solvant de 30 % à 60 %, un premier agent de couplage de 5 % à 15 %, un premier catalyseur de 0,01 % à 1% et de l'eau désionisée de 10 % à 30 %, dans laquelle le premier solvant est au moins un parmi le méthanol, l'éthanol, le propanol, l'isopropanol, le butanol ou l'éther méthylique de propylène glycol, dans laquelle le premier agent de couplage est au moins un parmi le 3-Aminopropyltriméthoxysilane, le y-Aminopropyl-triéthoxysilane, le y-(2,3-Epoxypropoxy)propyl-triméthoxysilane, le y-Méthacryloxypropyltriméthoxysilane ou le N-(β-Aminoéthyl)-y-aminopropyltriméthoxysilane, et dans laquelle le premier catalyseur est au moins un parmi l'acide chlorhydrique, l'acide nitrique ou une solution d'ammoniac ; et
l'agent chélatant comprend, en pourcentage en masse, un absorbeur d'UV de 1 % à 15 %, un absorbeur de lumière bleue de 1 % à 15 %, un second solvant de 40 % à 60 %, un second catalyseur de 0,01 % à 1 %, et un second agent de couplage de 10 % à 30 %, dans lequel l'absorbeur d'UV présente un pic d'absorption dans une plage de longueur d'onde de 330 nm à 370 nm, dans lequel l'absorbeur de lumière bleue présente un pic d'absorption dans une plage de longueurs d'onde de 400 nm à 420 nm, dans lequel le second solvant est au moins un parmi l'acétate de butyle, l'éther méthylique de propylène glycol, l'acétate d'isobutyle, ou le xylène, dans lequel le second agent de couplage est au moins l'un parmi le 3-Aminopropyltriméthoxysilane, le y-Aminopropyl-triéthoxysilane, le y-(2,3-Epoxypropoxy)propyl-triméthoxysilane, le y-Méthacryloxypropyltriméthoxysilane, ou le N-(β-Aminoéthyl)-y-aminopropyltriméthoxysilane, et dans lequel le second catalyseur est au moins un parmi le dilaurate de dibutyl étain, un catalyseur d'organobismuth, ou de l'octoate stanneux.

2. Solution de revêtement selon la revendication 1, dans laquelle le sol de silice est ajouté avec l'agent chélatant de 5 % à 20 % en pourcentage en masse.

3. Solution de revêtement selon la revendication 1, dans laquelle le silicate est au moins un parmi l'orthosilicate de tétraméthyle, l'orthosilicate de tétraéthyle, le triméthoxysilane, le triéthoxysilane ou le diméthyldiméthoxysilane.

4. Solution de revêtement selon la revendication 1, dans laquelle une teneur en hydroxyle de l'absorbeur d'UV est supérieure ou égale à 5 % en pourcentage en masse, et l'absorbeur d'UV est au moins un parmi un absorbeur d'UV de benzophénone, un absorbeur d'UV de benzimidazole, ou un absorbeur d'UV de triazine.

5. Solution de revêtement selon la revendication 1, dans laquelle une teneur en hydroxyle de l'absorbeur de lumière bleue est supérieure ou égale à 5 % en pourcentage en masse, et l'absorbeur de lumière bleue est au moins un parmi un absorbeur de lumière bleue azoïque, un absorbeur de lumière bleue d'isoindolinone, un absorbeur de lumière bleue de quinophtalone, un absorbeur de lumière bleue de benzimidazolone, ou un absorbeur de lumière bleue composite organique-inorganique.

6. Feuille de verre (10) pour bloquer de la lumière ultraviolette (UV) et bleue, comprenant un panneau de verre fléchi (1) et un revêtement (2) pour bloquer de la lumière UV et bleue, le revêtement (2) étant formé à partir de la solution de revêtement de l'une quelconque des revendications 1 à 5 et étant disposé sur au moins une surface du panneau de verre fléchi (1), dans laquelle le revêtement (2) comprend de la silice, un absorbeur de lumière bleue et un absorbeur d'UV, le revêtement (2) présente une épaisseur dans une plage allant de 2 µm à 12 µm, le revêtement (2) présente une transmittance inférieure ou égale à 5 % sur une plage de longueur d'onde de 300 nm à 400 nm, et le revêtement (2) présente une transmittance maximale inférieure à 30 % sur une plage de longueur d'onde de 400 nm à 440 nm.

7. Feuille de verre (10) selon la revendication 6, dans laquelle le revêtement (2) présente une transmittance inférieure ou égale à 2 % sur la plage de longueur d'onde de 300 nm à 400 nm, et le revêtement (2) présente une transmittance maximale inférieure ou égale à 20 % sur la plage de longueur d'onde de 400 nm à 440 nm.

8. Feuille de verre (10) selon la revendication 6, dans laquelle le revêtement (2) présente une transmittance inférieure ou égale à 1 % sur la plage de longueur d'onde de 300 nm à 400 nm, et le revêtement (2) présente une transmittance maximale inférieure ou égale à 10 % sur la plage de longueur d'onde de 400 nm à 440 nm.

9. Feuille de verre (10) selon la revendication 6, dans laquelle le revêtement (2) présente une transmittance T460 à une longueur d'onde de 460 nm et une transmittance T410 à une longueur d'onde de 410 nm, dans laquelle 4 ≤ T460/T410 ≤ 60.

10. Verre stratifié pour bloquer de la lumière ultraviolette (UV) et bleue, comprenant la feuille de verre (10) de l'une quelconque des revendications 6 à 9, une couche d'adhésif intermédiaire (20) et un second panneau de verre (30), dans lequel la couche d'adhésif intermédiaire (20) est enserrée entre la feuille de verre (10) et le second panneau de verre (30), la feuille de verre (10) comprend le panneau de verre fléchi (1) et le revêtement (2), le revêtement (2) est disposé sur au moins une surface du panneau de verre fléchi (1), et le revêtement (2) est situé entre le panneau de verre fléchi (1) et la couche d'adhésif intermédiaire (20) .

11. Verre feuilleté pour bloquer de la lumière ultraviolette (UV) et bleue et capable de gradation ou d'émission de lumière, comprenant un premier panneau de verre, une première couche d'adhésif, une structure de gradation ou une structure d'émission de lumière, une seconde couche d'adhésif et un second panneau de verre qui sont empilés en séquence, dans lequel
un revêtement pour bloquer la lumière UV et bleue est disposé entre le premier panneau de verre et la structure de gradation ou entre le premier panneau de verre et la structure d'émission de lumière, dans lequel le revêtement est formé à partir de la solution de revêtement de l'une quelconque des revendications 1 à 5 et comprend de la silice, un absorbeur de lumière bleue et un absorbeur d'UV,
le revêtement présente une transmittance inférieure ou égale à 5 % sur une plage de longueur d'onde de 300 nm à 400 nm, et le revêtement présente une transmittance maximale inférieure à 30 % sur une plage de longueur d'onde de 400 nm à 440 nm ; et/ou
le revêtement est disposé entre le second panneau de verre et la structure de gradation ou entre le second panneau de verre et la structure électroluminescente, dans lequel le revêtement est formé à partir de la solution de revêtement selon l'une quelconque des revendications 1 à 5 et comprend de la silice, le revêtement présente une transmittance inférieure ou égale à 5 % sur une plage de longueur d'onde de 300 nm à 400 nm, et le revêtement présente une transmittance maximale inférieure à 30 % sur une plage de longueur d'onde de 400 nm à 440 nm.
